(19) Europäisches Patentamt / European Patent Office / Office européen des brevets

(11) **EP 1 857 801 B1**

(12) **FASCICULE DE BREVET EUROPEEN**

(45) Date de publication et mention
de la délivrance du brevet:
**16.03.2011 Bulletin 2011/11**

(51) Int Cl.:
*G01M 15/00* (2006.01)  *F02D 35/02* (2006.01)

(21) Numéro de dépôt: **07301023.3**

(22) Date de dépôt: **09.05.2007**

(54) **Procédé de détection d'une perte de combustion et application à la commande d'un moteur à taux de compression variable (VCR)**

Verfahren zur Erkennung eines Verbrennungsverlusts und Anwendung auf die Steuerung eines Motors mit variabler Kompression (VCR)

Method of detecting a loss of combustion and application to controlling a variable compression rate (VCR) engine

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.05.2006 FR 0604305**

(43) Date de publication de la demande:
**21.11.2007 Bulletin 2007/47**

(73) Titulaire: **Renault**
**92109 Boulogne Billancourt (FR)**

(72) Inventeurs:
• **Devaud, Emmanuel**
**92140, CLAMART (FR)**
• **Emery, Pascal**
**91120, PALAISEAU (FR)**
• **Navarro, Marcos**
**75014, PARIS (FR)**

(56) Documents cités:
EP-A- 1 653 071   EP-A2- 1 963 648
WO-A-2004/023089   DE-A1- 10 327 687
US-A1- 5 351 528

**Description**

La présente invention concerne le contrôle des moteurs à combustion interne. Plus particulièrement l'invention concerne un procédé de détection des pertes de combustion et l'application dudit procédé à la commande robuste d'un moteur à taux de compression variable.

Dans le domaine des moteurs à taux de compression variable (Variable Compression Rate en anglais, ou encore VCR), de nombreux dispositifs actionneurs connus permettent de faire varier le taux de compression en cours de fonctionnement du moteur.

On peut ainsi citer les brevets US 4834031, US 6412453 et US 6736091 qui utilisent des dispositifs hydrauliques disposés au niveau du palier entre le piston et le vilebrequin permettre de faire varier la longueur apparente de la bielle. D'autres réalisations sont connues telles que des mécanismes faisant varier la géométrie du piston, de la bielle ou encore le volume de la chambre de combustion.

De tels dispositifs actionneur permettent avantageusement d'augmenter le taux de compression lorsque le moteur est soumis à une charge faible afin d'améliorer la puissance délivrée tout en diminuant les émissions polluantes. Cependant si le taux de compression est trop élevé un phénomène préjudiciable de cliquetis peut apparaître.

Il est connu de détecter ce cliquetis afin d'empêcher que le taux de compression ne devienne trop élevé. Le brevet US 4834031 divulgue ainsi l'utilisation d'un capteur de cliquetis. US 6666177 présente encore un contrôle optimal utilisant un tel capteur de cliquetis afin de commander le taux de compression pour que ce taux soit le plus élevé possible sans provoquer de cliquetis.

Cependant, lorsque le taux de compression devient trop faible, d'autres problèmes apparaissent, qui ne sont pas envisagés dans l'art antérieur et pour lesquels aucune solution n'a encore été proposée.

Un problème important est l'apparition d'une perte de combustion (ou raté de combustion), lorsque le taux de compression devient trop faible, par exemple dans des conditions critiques telles qu'un démarrage à froid ou encore une faible charge. La commande d'un moteur est compliquée par une dispersion des caractéristiques dimensionnelles des composants du moteur. Cette dispersion peut provenir de la tolérance des différentes pièces ou encore de l'usure ou du vieillissement. Cette dispersion rend délicate la détermination du point de fonctionnement où le taux de compression devient trop faible et où une perte de combustion peut se produire.

On connaît également le document DE 10327687 décrivant un procédé de détection de raté de combustion.

La présente invention se propose de répondre en particulier à ce problème en proposant un procédé permettant la détection d'un raté de combustion. Ce procédé est avantageusement appliqué à la réalisation d'une commande robuste d'un moteur VCR. L'invention a pour objet un procédé de commande d' un moteur (1) à combustion interne tel que décrit dans la revendication 1. Le procédé comprend la détection (19) d'une éventuelle perte de combustion en utilisation

un procédé de détection d'un raté de combustion pour un moteur à combustion interne comprenant une chambre de combustion et un capteur capable de mesurer la pression dans ladite chambre, comprenant les étapes successives suivantes :

a) mesure de la pression $p$ dans la chambre de combustion, calcul du dégagement volumique d'énergie $C_{p,\theta} = \dfrac{dQ}{Vd\theta}$, en fonction de la pression $p$ et de l'angle vilebrequin $\theta$,

b) comparaison de $C_{p,\theta}$ avec un seuil prédéfini $S$ durant un cycle du moteur, un raté de combustion étant détecté si $C_{p,\theta}$ reste inférieur à $S$ durant un cycle moteur complet.

Avantageusement ce procédé ne nécessite qu'un capteur unique de pression.

Avantageusement encore, l'utilisation de la variable volumique $C_{p,\theta}$ amplifie le pic de combustion dans la zone utile, et réduit le bruit de mesure dans les autres zones, facilitant ainsi le seuillage.

Un autre objet de l'invention est l'application d'un tel procédé à la commande robuste d'un moteur VCR. Ce faisant, l'invention propose une approche inédite de la commande d'un moteur VCR.

D'autres caractéristiques, détails et avantages de l'invention ressortiront plus clairement de la description détaillée donnée ci-après à titre indicatif en relation avec des dessins sur lesquels :

- la figure 1 présente un schéma d'un moteur apte aux procédés selon l'invention,
- les figures 2a et 2b comparent respectivement une courbe dQ/dθ et une courbe dQ/Vdθ,
- la figure 3a présente un synoptique du calcul de C selon un premier mode de réalisation,
- la figure 3b présente un synoptique du calcul de C selon un second mode de réalisation alternatif,

- la figure 4 présente un synoptique du procédé de détection d'une perte de combustion selon l'invention,
- la figure 5 présente un synoptique d'un procédé de commande robuste d'un moteur VCR selon l'invention.

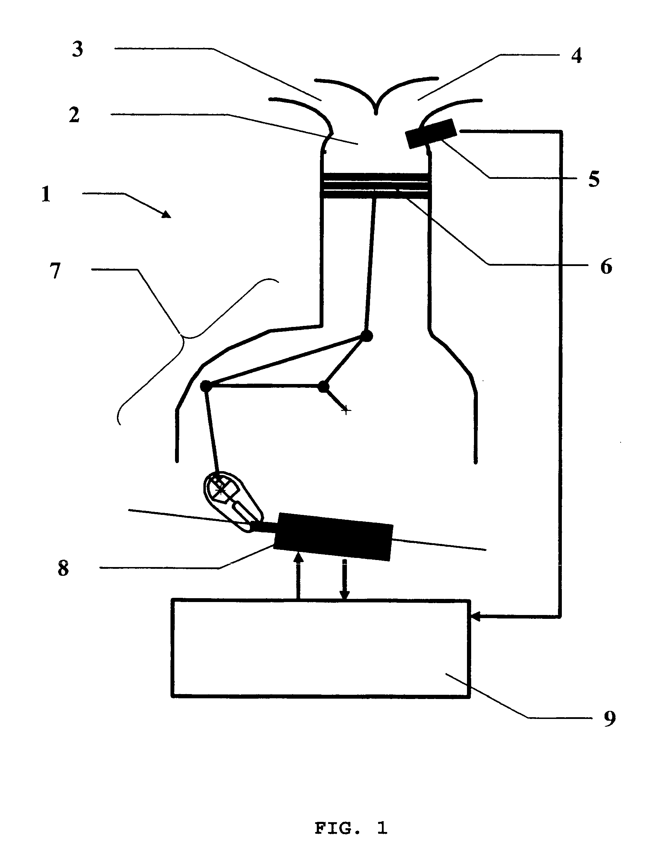

La figure 1 présente schématiquement un moteur 1 à combustion interne. Ce moteur 1 comporte classiquement une tubulure d'admission 3, permettant l'introduction d'air dans une chambre de combustion 2, et une tubulure d'échappement 4 permettant la sortie des résidus de combustion. Pour la mise en oeuvre de l'invention un capteur de pression 5 capable de mesurer la pression p dans la chambre de combustion 2 est utilisé.

Le procédé selon l'invention a pour but la détection d'un raté de combustion appelé perte de combustion dans la suite de la description. Une telle perte de combustion se produit typiquement lorsque le taux de compression réalisé par le moteur 1 devient trop faible. Une telle perte de combustion est préjudiciable en ce que le moteur 1 n'est dans ce cas pas propulsif. Afin de détecter une telle perte de combustion, le procédé comprend les étapes successives suivantes :

a) mesure de la pression p dans la chambre de combustion 2, calcul du dégagement volumique d'énergie

$$C_{p,\theta} = \frac{dQ}{Vd\theta} \ ,$$ où Q désigne la quantité d'énergie présente dans les gaz de la chambre de combustion 2, V le volume de la chambre de combustion 2, en fonction de la pression p et de l'angle vilebrequin $\theta$,

b) comparaison de $C_{p,\theta}$ avec un seuil prédéfini S.

Ces étapes sont répétées tout au long d'un cycle de combustion du moteur 1.

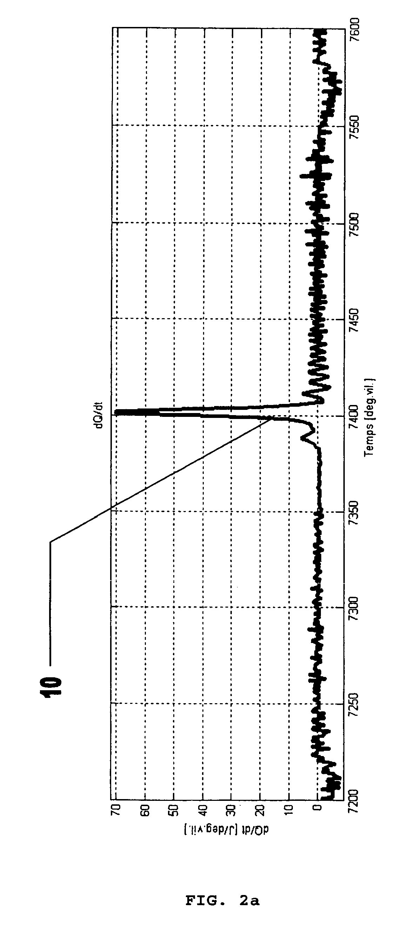

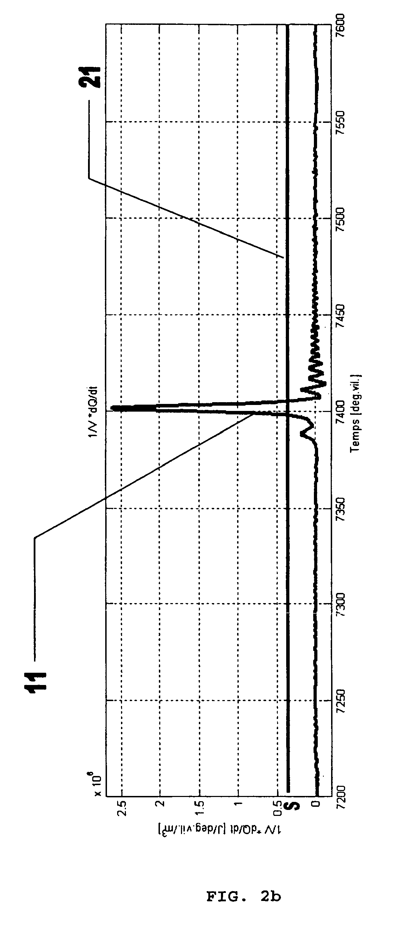

En se référant aux figures 2a, 2b les deux courbes 10, 11 figurent en abscisse l'angle vilebrequin $\theta$ (encore dénommé temps selon un abus de langage) exprimé en degrés vilebrequin (deg.vil). La courbe 10 représente le dégagement d'énergie exprimé par la dérivée de l'énergie Q contenue dans les gaz de la chambre de combustion 2, en

fonction de $\theta$ : $\frac{dQ}{d\theta}$ (ici repérée $\frac{dQ}{dt}$ , avec comme unité J/deg. vil.) La courbe 11 représente le dégagement volumique d'énergie exprimé par la dérivée de l'énergie Q ramenée au volume V(en m$^3$) de la chambre de combustion 2,

en fonction de $\theta$ $\frac{dQ}{Vd\theta}$ . (ici libellée $\frac{dQ}{Vdt}$ selon une nouvelle fois l'abus de langage courant). Cette grandeur volumique est encore nommée $C_{p,\theta}$.

Les deux courbes 10, 11 figurent le cas d'un cycle où la combustion se déroule normalement, sans perte de combustion, ainsi qu'en témoigne la présence d'un pic marqué correspondant au dégagement d'énergie lors d'une combustion réussie.

Il est possible, dans le procédé de détection d'une perte de combustion d'utiliser la grandeur $\frac{dQ}{d\theta}$ . Cependant

la courbe 11 montre nettement que la seconde grandeur $C_{p,\theta} = \frac{dQ}{Vd\theta}$ est beaucoup moins perturbée par divers bruits. De plus, si les deux courbes 10, 11 présentent un pic marqué lors de la combustion, ce pic est nettement plus amplifié pour la grandeur $C_{p,\theta}$. Ces deux caractéristiques, pic amplifié et diminution du bruit, permettent d'utiliser un seuil S plus faible et garantissent une meilleure qualité du seuillage de l'étape c).

L'opération de l'étape c) consiste à comparer au cours d'un cycle du moteur, la valeur de $C_{p,\theta}$ avec la valeur d'un seuil S choisi. Cette comparaison est figurée graphiquement par la droite horizontale S. La valeur $C_{p,\theta}$ de la courbe 11 devient supérieure à S au niveau du pic, indiquant que la combustion s'est déroulée normalement. A contrario dans le cas (non représenté) d'une perte de combustion, la courbe $C_{p,\theta}$ reste, en tout point du cycle, inférieure à S, ce qui est indicatif d'une perte de combustion. Ainsi la comparaison sur la durée d'un cycle de $C_{p,\theta}$ et de S permet de détecter une perte de combustion. Pour les besoins de ladite comparaison, il est possible de considérer le cycle terminé au moment de l'ouverture de la soupape d'échappement.

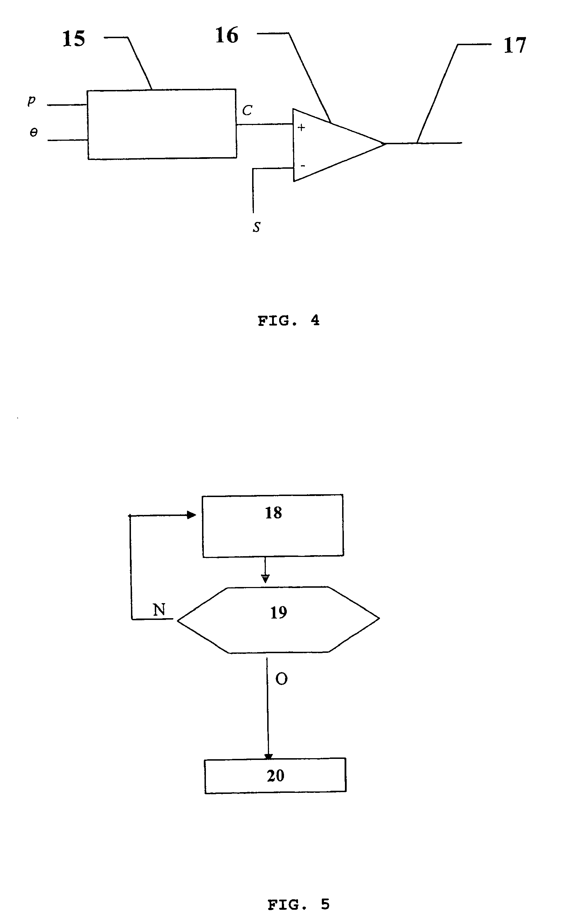

Le procédé de détection d'une perte de combustion est encore illustré par le schéma bloc de la figure 4. Le bloc 15 détermine $C_{p,\theta}$ en fonction de $p$ et de $\theta$ selon les opérations détaillées plus bas. Le seuillage 16 compare le résultat avec un seuil S pour produire le diagnostic final 17 d'état de la combustion.

La notation $\dfrac{dF}{d\theta}$ représente de manière classique, la dérivée de la fonction, ici $F$, relativement à la variable, ici $\theta$.

Le dégagement d'énergie (ou variation de l'énergie Q) est déterminé, selon un premier mode de réalisation, par la formule bien connue de l'homme du métier :

$$\frac{dQ}{d\theta} = \frac{1}{\gamma - 1} V\left( \frac{p}{m}\frac{dm}{d\theta} + \frac{p}{T}\frac{dT}{d\theta} - \frac{p}{V}\frac{dV}{d\theta} \right) + \frac{\gamma}{\gamma - 1} p \frac{dV}{d\theta}$$

ou encore

$$C_{p,\theta} = \frac{dQ}{Vd\theta} = \frac{1}{\gamma - 1}\left( \frac{p}{m}\frac{dm}{d\theta} + \frac{p}{T}\frac{dT}{d\theta} - \frac{p}{V}\frac{dV}{d\theta} \right) + \frac{\gamma}{\gamma - 1} \frac{p}{V}\frac{dV}{d\theta} \qquad \text{(formule A)}$$

où Q désigne l'énergie contenue dans les gaz de la chambre de combustion 2,

V le volume de la chambre de combustion,

T la température dans la chambre de combustion,

p la pression dans la chambre de combustion,

$\gamma$ le rapport des chaleurs spécifiques ($C_p$ et $C_v$),

$\theta$ l'angle vilebrequin, m la masse de gaz enfermés dans la chambre de combustion 2.

Après simplification et discrétisation, cette formule permet d'aboutir à la formule de récurrence suivante :

$$C_{p,\theta} = \frac{dQ}{Vd\theta} = \frac{1}{\gamma - 1}\left( \frac{p_\theta}{T_\theta}\frac{T_\theta - T_{\theta-\Delta\theta}}{\Delta\theta} \right) + \frac{p_\theta}{V_\theta}\left( \frac{V_\theta - V_{\theta-\Delta\theta}}{\Delta\theta} \right)$$

où $\Delta\theta$ est le pas de calcul de récurrence, l'indice $\theta$, respectivement $\theta$-$\Delta\theta$, associé à une grandeur ($p$, $T$ ou $V$) désignant la valeur de cette grandeur pour l'angle de vilebrequin $\theta$, respectivement $\theta$ - $\Delta\theta$. Une récurrence nécessite une valeur initiale, ici choisie, en fin de phase d'admission, lors de la fermeture de la soupape d'admission. A cette origine $\theta_0$ des angles est calculé une valeur initiale de récurrence $C_0 = C_{p0,\theta0}$ correspondant aux valeurs initiales $p_0$, $T_0$ et $V_0$ des grandeurs respectives $p$, $T$ et $V$, déterminées pour cet angle $\theta_0$.

Le rapport $\gamma = \dfrac{C_p}{C_v}$ des chaleurs spécifiques respectivement à pression (Cp) et à volume (Cv) constant est considéré constant avant la combustion et durant les premiers instants de la combustion. Pour les besoins de l'invention $\gamma$ est pris égal à 1,4.

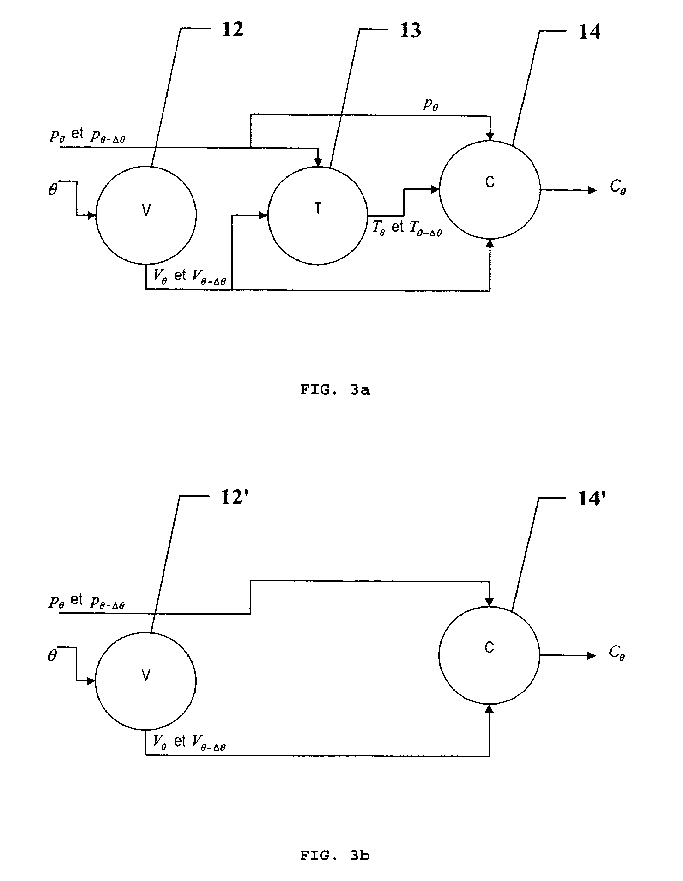

La figure 3a montre un synoptique de calcul par récurrence de $C_{p,\theta}$. De manière connue, dans une première étape 12, le volume $V_\theta$ instantané de la chambre de combustion 2 à l'angle $\theta$ est déterminé en fonction de la géométrie, connue a priori, du moteur 1.

La valeur de la température $T_\theta$ pour chaque angle $\theta$ est calculée à l'étape 13, selon la formule de récurrence:

$$T_\theta = T_{\theta-\Delta\theta}\left( \frac{1}{\dfrac{p_{\theta-\Delta\theta}}{p_\theta} + \dfrac{V_{\theta-\Delta\theta}}{V_\theta} - 1} \right)$$

On note que la nouvelle valeur de la température $T_\theta$ dépend de la valeur de la température $T_{\theta-\Delta\theta}$ calculée à l'étape de récurrence précédente. Cette valeur $T_{\theta-\Delta\theta}$ est donc disponible à l'instant du calcul. De même, la nouvelle valeur de la

température $T_\theta$ dépend des valeurs du volume $V_\theta$ de l'étape en cours et $V_{\theta-\Delta\theta}$ de l'étape précédente. Enfin, la nouvelle valeur de la température $T_\theta$ dépend encore des valeurs de pression $p$ mesurées par le capteur 5, à l'étape courante $p_\theta$ et à l'étape précédente $p_{\theta-\Delta\theta}$. Ici encore, la récurrence débute en fin de la phase d'admission, avec une température initiale $T_0$.

La mesure directe de la température dans la chambre de combustion 2 n'est technologiquement pas envisageable. Deux options sont cependant possibles pour déterminer $T_0$. Selon la première option la température initiale $T_0$ est déterminée à partir d'une mesure, pouvant être réalisée au niveau de la tubulure d'admission 3 de la température de l'air admis dans la chambre de combustion 2. Cette valeur mesurée est indicative de la température initiale $T_0$ dans la chambre de combustion 2. Cette valeur initiale $T_0$ n'est dans la pratique, pas déterminante. Il apparaît que son influence sur la courbe finale 11 de $C_{p,\theta}$ reste limitée au regard de la détection d'une perte de combustion. Il est donc possible, selon une seconde option, sans introduire trop d'erreur, de considérer une valeur de la température initiale $T_0$ constante, par exemple égale à 300K.

En se référant toujours à la figure 3a, la grandeur $C_{p,\theta}$ est calculée à l'étape 14, en fonction de $p_\theta$ issu du capteur de pression 5, de $T_\theta$ et de $T_{\theta-\Delta\theta}$ déterminés à l'étape 13, et de $V_\theta$ et de $V_{\theta-\Delta\theta}$ déterminés à l'étape 12.

Selon un second mode de réalisation, le dégagement volumique d'énergie $C_{p,\theta}$ est déterminé, à partir de la formule B suivante :

$$C_{p,\theta} = \frac{dQ}{Vd\theta} = \frac{1}{\gamma-1}\left(\frac{p}{m}\frac{dm}{d\theta} + \frac{dp}{d\theta}\right) + \frac{\gamma}{\gamma-1}\frac{p}{V}\frac{dV}{d\theta} \quad \text{(formule B)}$$

thermodynamiquement équivalente à la formule A, où
$Q$ désigne l'énergie contenue dans les gaz de la chambre de combustion 2,
$V$ le volume de la chambre de combustion,
$p$ la pression dans la chambre de combustion,
$\gamma$ le rapport des chaleurs spécifiques ($C_p$ et $C_v$),
$\theta$ l'angle vilebrequin,
$m$ la masse de gaz enfermés dans la chambre de combustion 2.

Après simplification et discrétisation, cette formule permet d'aboutir à la formule de récurrence suivante :

$$C_{p,\theta} = \frac{dQ}{Vd\theta} = \frac{1}{\gamma-1}\left(\frac{p_\theta - p_{\theta-\Delta\theta}}{\Delta\theta}\right) + \frac{\gamma}{\gamma-1}\frac{p_\theta}{V_\theta}\left(\frac{V_\theta - V_{\theta-\Delta\theta}}{\Delta\theta}\right)$$

où $\Delta\theta$ est le pas de calcul de récurrence, l'indice $\theta$, respectivement $\theta-\Delta\theta$, associé à une grandeur ($p$ ou $V$) désignant la valeur de cette grandeur pour l'angle de vilebrequin $\theta$, respectivement $\theta-\Delta\theta$. Une récurrence nécessite une valeur initiale, ici choisie, en fin de phase d'admission, lors de la fermeture de la soupape d'admission. A cette origine $\theta_0$ des angles est calculé une valeur initiale de récurrence $C_0 = C_{p,\theta_0}$ correspondant aux valeurs initiales $p_0$ et $V_0$ des grandeurs respectives $p$ et $V$, déterminées pour cet angle $\theta_0$.

Le rapport $\gamma = \dfrac{C_p}{C_v}$ des chaleurs spécifiques respectivement à pression (Cp) et à volume (Cv) constant est considéré constant avant la combustion et durant les premiers instants de la combustion. Pour les besoins de l'invention $\gamma$ est pris égal à 1,4.

La figure 3b montre un synoptique de calcul par récurrence de $C_{p,\theta}$. De manière connue, dans une première étape 12', le volume $V_\theta$ instantané de la chambre de combustion 2 à l'angle $\theta$ est déterminé en fonction de la géométrie, connue a priori, du moteur 1.

En se référant toujours à la figure 3b, la grandeur $C_{p,\theta}$ est calculée à l'étape 14', en fonction de $p_\theta$ et $p_{\theta-\Delta\theta}$ issus du capteur de pression 5, et de $V_\theta$ et de $V_{\theta-\Delta\theta}$ déterminés à l'étape 12'.

Le second mode de réalisation selon la formule B peut paraître plus simple. Cependant il met en oeuvre la dérivée de la pression $\dfrac{dp}{d\theta}$ qui dans la pratique est une grandeur relativement bruitée. Le premier mode de réalisation selon la formule A est en conséquence avantageux en ce qu'il permet d'éviter de recourir à la dérivée de la pression.

La valeur du seuil S est déterminée suffisamment faible pour être inférieure au sommet du pic de combustion lorsqu'il se produit, et suffisamment élevée pour rester supérieure aux valeurs maximales du bruit. Cette valeur peut être déterminée empiriquement au banc d'essai.

Le seuil S est déterminé lors de la mise au point du système. Il est intéressant de faire dépendre S du point de fonctionnement du moteur 1, par exemple en fonction de la quantité de carburant injectée par cycle et/ou du régime moteur. Il est aussi possible d'utiliser une valeur de seuil S unique et constante.

La valeur du pas de calcul $\Delta\theta$ est de manière connue un compromis entre la précision du résultat et la vitesse du calcul. Il est possible d'utiliser un pas de calcul variable ou constant. Sans que cela soit impératif, il à été constaté un bon compromis pour une valeur de $\Delta\theta$ constante égale à 1° (un degré d'angle) vilebrequin.

Le précédent procédé de détection d'une perte de combustion, dans ses différents modes de réalisation, est avantageusement applicable à la commande robuste d'un moteur à combustion interne comprenant un moyen 7 de variation du taux de compression. Le schéma bloc de la figure 5 illustre ce procédé. Un tel procédé de commande comprend les étapes successives suivantes :

> a) commande 18 du moyen 7 de variation du taux de compression depuis une position de commande n vers une nouvelle position de commande n+1,
> b) détection 19 d'une éventuelle perte de combustion en utilisant le procédé de détection d'une perte de combustion selon l'un des modes de réalisation précédemment décrits,
> c) si une perte de combustion est détectée, le procédé retourne 20 à la position de commande précédente n, qui devient la nouvelle position de commande limite,
> d) si une perte de combustion n'est pas détectée, le procédé se poursuit à l'étape a).

Une telle commande peut être appliquée en complément d'une autre commande, qui assure la génération des nouvelles consignes, afin de surveiller que cette dernière commande ne rentre pas dans un domaine de fonctionnement où apparaissent des pertes de combustion. Alternativement, une telle commande peut être utilisée seule en générant une nouvelle consigne tendant en permanence à diminuer le taux de compression, sauf lorsqu'une perte de combustion est détectée. Dans ce dernier cas la commande revient à la dernière consigne ne produisant pas de perte de combustion ou génère une consigne de taux de compression plus élevée. Est ainsi mise en place une stratégie qui maintient un taux de compression le plus faible possible en limite de la perte de combustion.

## Revendications

**1.** Procédé de commande d'un moteur (1) à combustion interne comprenant une chambre de combustion (2), un capteur (5) capable de mesurer la pression dans ladite chambre (2) et un moyen de variation (7, 8) du taux de compression de ce moteur, **caractérisé en ce qu'**il comprend les étapes successives suivantes :

> a) commande (18) du moyen de variation (8) du taux de compression depuis une position de commande n vers une nouvelle position de commande n+1,
> b) détection (19) d'un éventuelle raté de combustion en utilisant un procédé de détection qui comprend les étapes successives suivantes :
>
>> i) mesure de la pression $p$ dans la chambre de combustion (2),
>>
>> ii) calcul du dégagement volumique d'énergie $C_{p,\theta} = \dfrac{dQ}{Vd\theta}$ , où Q désigne la quantité d'énergie présente dans les gaz de la chambre de combustion (2), $V$ le volume de la chambre de combustion (2), en fonction de la pression $p$ et de l'angle du vilebrequin $\theta$ du moteur,
>> iii) comparaison de $C_{p,\theta}$ avec un seuil prédéfini $S$ durant un cycle du moteur, un raté de combustion étant détecté si $C_{p,\theta}$ reste inférieur à $S$ durant un cycle moteur complet,
>
> c) si un raté de combustion est détecté, retour à la position de commande précédente n, qui devient (20) la nouvelle position de commande limite,
> d) si un raté de combustion n'est pas détecté, poursuite à l'étape a).

**2.** Procédé selon la revendication 1, où $C_{p,\theta}$ est calculé à l'étape b) selon la formule de récurrence :

$$C_{p,\theta} = \frac{1}{\gamma - 1}\left( \frac{p_\theta}{T_\theta} \frac{T_\theta - T_{\theta - \Delta\theta}}{\Delta\theta} \right) + \frac{p_\theta}{V_\theta}\left( \frac{V_\theta - V_{\theta - \Delta\theta}}{\Delta\theta} \right)$$

où:

$V$ désigne le volume de la chambre de combustion (2),
$T$ la température dans la chambre de combustion (2),
$p$ la pression dans la chambre de combustion (2),
$\gamma$ le rapport des chaleurs spécifiques,
$\theta$ l'angle vilebrequin,
$\Delta\theta$ le pas de calcul de récurrence,

où l'indice $\theta$, respectivement $\theta-\Delta\theta$, associé à une grandeur désigne la valeur de cette grandeur pour l'angle de vilebrequin $\theta$, respectivement $\theta-\Delta\theta$, et où la récurrence débute en fin de phase d'admission.

3. Procédé selon la revendication 2, où la température $T$ est calculée selon la formule de récurrence :

$$T_\theta = T_{\theta - \Delta\theta}\left( \frac{1}{\dfrac{p_{\theta - \Delta\theta}}{p_\theta} + \dfrac{V_{\theta - \Delta\theta}}{V_\theta} - 1} \right)$$

où :

$V$ désigne le volume de la chambre de combustion (2),
$T$ la température dans la chambre de combustion (2),
$p$ la pression dans la chambre de combustion (2),
$\theta$ l'angle vilebrequin,
$\Delta\theta$ le pas de calcul de récurrence, et où l'indice $\theta$, respectivement $\theta-\Delta\theta$, associé à une grandeur désigne la valeur de cette grandeur pour l'angle de vilebrequin $\theta$, respectivement $\theta-\Delta\theta$, et où la récurrence débute en fin de la phase d'admission, avec une température initiale $T_0$.

4. Procédé selon la revendication 3, où la température initiale $T_0$ est déterminée à partir d'une mesure de la température de l'air admis dans la chambre de combustion ou prise constante égale à 300K.

5. Procédé selon la revendication 1, où $C_{p,\theta}$ est calculé à l'étape b) selon la formule de récurrence :

$$C_{p,\theta} = \frac{1}{\gamma - 1}\left( \frac{P_\theta - P_{\theta - \Delta\theta}}{\Delta\theta} \right) + \frac{\gamma}{\gamma - 1}\frac{p_\theta}{V_\theta}\left( \frac{V_\theta - V_{\theta - \Delta\theta}}{\Delta\theta} \right)$$

où:

$V$ désigne le volume de la chambre de combustion (2),
$p$ la pression dans la chambre de combustion (2),
$\gamma$ le rapport des chaleurs spécifiques,
$\theta$ l'angle vilebrequin,
$\Delta\theta$ le pas de calcul de récurrence,

où l'indice $\theta$, respectivement $\theta-\Delta\theta$, associé à une grandeur désigne la valeur de cette grandeur pour l'angle de vilebrequin $\theta$, respectivement $\theta-\Delta\theta$, et où la récurrence débute en fin de phase d'admission.

**6.** Procédé selon l'une quelconque des revendications 1 à 5, où le volume *V* est calculé, pour chaque angle de vilebrequin θ en fonction de la géométrie du moteur (1).

**7.** Procédé selon l'une quelconque des revendications 1 à 6, où le seuil *S* est déterminé en fonction du point de fonctionnement du moteur (1).

**8.** Procédé selon la revendication 7, où *S* est fonction de la quantité de carburant injectée par cycle et/ou du régime moteur.

**9.** Procédé selon l'une quelconque des revendications 1 à 6, où *S* est constant.

**10.** Procédé selon l'une quelconque des revendications 2 à 9, où le pas de calcul Δθ est constant.

**11.** Procédé selon la revendication 8, où le pas de calcul Δθ est égal à 1° (un degré d'angle) vilebrequin.

**Claims**

**1.** Method of controlling an internal combustion engine (1) comprising a combustion chamber (2), a sensor (5) capable of measuring the pressure in said chamber (2) and a means (7, 8) of varying the compression rate of this engine, **characterized in that** it comprises the following successive steps:

a) controlling (18) the means (8) of varying the compression rate from a control position n to a new control position n+1,
b) detecting (19) a possible, combustion misfire by using a detection method which comprises the following successive steps:

i) measuring the pressure *p* in the combustion chamber (2),

ii) calculating the volume release of energy $C_{p,\theta} = \dfrac{dQ}{V d\theta}$, in which Q designates the quantity of energy present in the gases of the combustion chamber (2), *V* the volume of the combustion chamber (2), according to the pressure *p* and the crankshaft angle θ of the engine,
iii) comparing $C_{p,0}$ with a predefined threshold S during an engine cycle, a combustion misfire being detected if $C_{p,\theta}$ remains less than S during a complete engine cycle,

c) if a combustion misfire is detected, returning to the previous control position n, which becomes (20) the new limit control position,
d) if a combustion misfire is not detected, continuing with the step a).

**2.** Method according to Claim 1, in which $C_{p,\theta}$ is calculated in the step b) according to the recurrence formula:

$$C_{p,0} = \frac{1}{\gamma - 1}\left( \frac{p_\theta}{T_\theta}\frac{T_\theta - T_{\theta-\Delta\theta}}{\Delta\theta} \right) + \frac{p_\theta}{V_\theta}\left( \frac{V_\theta - V_{\theta-\Delta\theta}}{\Delta\theta} \right)$$

in which:

*V* designates the volume of the combustion chamber (2),
*T* the temperature in the combustion chamber (2),
*p* the pressure in the combustion chamber (2),
γ the ratio of the specific heats,
θ the crankshaft angle,
Δθ the recurrence calculation interval,

in which the index θ, respectively θ-Δθ, associated with a quantity, designates the value of this quantity for the crankshaft angle θ, respectively θ-Δθ, and in which the recurrence begins at the end of the intake phase.

3. Method according to Claim 2, in which the temperature $T$ is calculated according to the recurrence formula:

$$T_\theta = T_{\theta-\Delta\theta}\left(\cfrac{1}{\cfrac{p_{\theta-\Delta\theta}}{p_\theta}+\cfrac{V_{\theta-\Delta\theta}}{V_\theta}-1}\right)$$

in which:

$V$ designates the volume of the combustion chamber (2),
$T$ the temperature in the combustion chamber (2),
$p$ the pressure in the combustion chamber (2),
θ the crankshaft angle,
Δθ the recurrence calculation interval, and in which the index θ, respectively θ-Δθ, associated with a quantity, designates the value of this quantity for the crankshaft angle θ, respectively θ-Δθ, and in which the recurrence begins at the end of the intake phase, with an initial temperature $T_0$.

4. Method according to Claim 3, in which the initial temperature $T_0$ is determined from a measurement of the temperature of the air admitted into the combustion chamber or taken as a constant equal to 300K.

5. Method according to Claim 1, in which $C_{p,\theta}$ is calculated in the step b) according to the recurrence formula:

$$C_{p,\theta} = \frac{1}{\gamma-1}\left(\frac{P_\theta - P_{\theta-\Delta\theta}}{\Delta\theta}\right)+\frac{\gamma}{\gamma-1}\frac{p_\theta}{V_\theta}\left(\frac{V_\theta - V_{\theta-\Delta\theta}}{\Delta\theta}\right)$$

in which:

$V$ designates the volume of the combustion chamber (2),
$p$ the pressure in the combustion chamber (2),
γ the ratio of specific heats,
θ the crankshaft angle,
Δθ the recurrence calculation interval,

in which the index θ, respectively θ-Δθ, associated with a quantity, designates the value of this quantity for the crankshaft angle θ, respectively θ-Δθ, and in which the recurrence begins at the end of the intake phase.

6. Method according to any one of Claims 1 to 5, in which the volume $V$ is calculated, for each crankshaft angle θ, according to the geometry of the engine (1).

7. Method according to any one of Claims 1 to 6, in which the threshold 5 is determined according to the operating point of the engine (1).

8. Method according to Claim 7, in which S is a function of the quantity of fuel injected per cycle and/or of the engine speed.

9. Method according to any one of Claims 1 to 6, in which $S$ is constant.

10. Method according to any one of Claims 2 to 9, in which the calculation interval Δθ is constant.

11. Method according to Claim 8, in which the calculation interval Δθ is equal to 1° (one degree of angle) crankshaft.

**Patentansprüche**

1. Verfahren zur Steuerung eines Verbrennungsmotors (1), der einen Brennraum (2), einen Sensor (5), der den Druck in dem Raum (2) messen kann, und eine Einrichtung (7, 8) zur Änderung des Verdichtungsverhältnisses dieses Motors enthält, **dadurch gekennzeichnet, dass** es die folgenden aufeinanderfolgenden Schritte enthält:

   a) Steuerung (18) der Einrichtung (8) zur Änderung des Verdichtungsverhältnisses von einer Steuerstellung n in eine neue Steuerstellung n+1,
   b) Erfassung (19) einer möglichen Fehlverbrennung unter Verwendung eines Erfassungsverfahrens, das die folgenden aufeinanderfolgenden Schritte enthält:

   i) Messen des Drucks p im Brennraum (2),

   ii) Berechnen der volumenmäßigen Energiefreisetzung $C_{p,\theta} = \dfrac{dQ}{V d\theta}$ , wobei Q die in den Gasen des Brennraums (2) vorhandene Energiemenge, V das Volumen des Brennraums (2) bezeichnet, in Abhängigkeit vom Druck p und vom Winkel der Kurbelwelle θ des Motors,
   iii) Vergleich von $C_{p,\theta}$ mit einer vordefinierten Schwelle S während eines Zyklus des Motors, wobei eine Fehlverbrennung erfasst wird, wenn $C_{p,\theta}$ während eines vollständigen Motorzyklus geringer als S bleibt,

   c) wenn eine Fehlverbrennung erfasst wird, Rückkehr in die vorhergehende Steuerstellung n, die die neue Grenz-Steuerstellung wird (20),
   d) wenn keine Fehlverbrennung erfasst wird, Fortsetzen des Schritts a).

2. Verfahren nach Anspruch 1, wobei $C_{p,0}$ im Schritt b) gemäß der Wiederholungsformel berechnet wird:

$$C_{p,\theta} = \frac{1}{\gamma - 1}\left( \frac{p_\theta}{T_\theta} \frac{T_\theta - T_{\theta - \Delta\theta}}{\Delta\theta} \right) + \frac{p_\theta}{V_\theta}\left( \frac{V_\theta - V_{\theta - \Delta\theta}}{\Delta\theta} \right)$$

   wobei:

   V das Volumen des Brennraums (2) bezeichnet,
   T die Temperatur im Brennraum (2),
   p den Druck im Brennraum (2),
   γ das Verhältnis der spezifischen Wärmen,
   θ den Kurbelwinkel,
   Δθ den Wiederholungs-Rechenschritt,

   wobei der einer Größe zugeordnete Index θ bzw. θ-Δθ den Wert dieser Größe für den Kurbelwinkel θ bzw. θ-Δθ bezeichnet, und wobei die Wiederholung am Ende der Ansaugphase beginnt.

3. Verfahren nach Anspruch 2, wobei die Temperatur T gemäß der Wiederholungsformel berechnet wird:

$$T_\theta = T_{\theta - \Delta\theta}\left( \frac{1}{\dfrac{p_{\theta - \Delta\theta}}{p_\theta} + \dfrac{V_{\theta - \Delta\theta}}{V_\theta} - 1} \right)$$

   wobei:

   V das Volumen des Brennraums (2) bezeichnet,

T die Temperatur im Brennraum (2),
p den Druck im Brennraum (2),
θ den Kurbelwinkel,
Δθ den Wiederholungsrechenschritt,

und wobei der einer Größe zugeordnete Index θ bzw. θ-Δθ den Wert dieser Größe für den Kurbelwinkel θ bzw. θ-Δθ bezeichnet, und wobei die Wiederholung am Ende der Ansaugphase beginnt, mit einer Anfangstemperatur $T_0$.

4. Verfahren nach Anspruch 3, wobei die Anfangstemperatur $T_0$ ausgehend von einer Messung der Temperatur der Luft bestimmt wird, die in den Brennraum angesaugt wird, oder konstant gleich 300K genommen wird.

5. Verfahren nach Anspruch 1, wobei $C_{p,\theta}$ im Schritt b) gemäß der Wiederholungsformel berechnet wird:

$$C_{p,\theta} = \frac{1}{\gamma-1}\left(\frac{P_\theta - P_{\theta-\Delta\theta}}{\Delta\theta}\right) + \frac{\gamma}{\gamma-1}\frac{p_\theta}{V_\theta}\left(\frac{V_\theta - V_{\theta-\Delta\theta}}{\Delta\theta}\right)$$

wobei:

V das Volumen des Brennraums (2) bezeichnet,
p den Druck im Brennraum (2),
γ das Verhältnis der spezifischen Wärmen,
θ den Kurbelwinkel,
Δθ den Wiederholungsrechenschritt,

wobei der einer Größe zugeordnete Index θ bzw. θ-Δθ den Wert dieser Größe für den Kurbelwinkel θ bzw. θ-Δθ bezeichnet, und wobei die Wiederholung am Ende der Ansaugphase beginnt.

6. Verfahren nach einem der Ansprüche 1 bis 5, wobei das Volumen V für jeden Kurbelwinkel θ in Abhängigkeit von der Geometrie des Motors (1) berechnet wird.

7. Verfahren nach einem der Ansprüche 1 bis 6, wobei die Schwelle S in Abhängigkeit vom Betriebspunkt des Motors (1) bestimmt wird.

8. Verfahren nach Anspruch 7, wobei S von der pro Zyklus eingespritzten Kraftstoffmenge und/oder der Motordrehzahl abhängt.

9. Verfahren nach einem der Ansprüche 1 bis 6, wobei S konstant ist.

10. Verfahren nach einem der Ansprüche 2 bis 9, wobei der Rechenschritt Δθ konstant ist.

11. Verfahren nach Anspruch 8, wobei der Rechenschritt Δθ gleich 1° (ein Winkelgrad) Kurbelwelle ist.

FIG. 1

FIG. 2a

FIG. 2b

EP 1 857 801 B1

FIG. 3a

FIG. 3b

FIG. 4

FIG. 5

**EP 1 857 801 B1**

RÉFÉRENCES CITÉES DANS LA DESCRIPTION

**Documents brevets cités dans la description**

- US 4834031 A
- US 6412453 B
- US 6736091 B
- US 6666177 B
- DE 10327687